(19) Europäisches Patentamt
European Patent Office
Office européen des brevets

(11) EP 4 601 482 B1

(12) # EUROPEAN PATENT SPECIFICATION

(45) Date of publication and mention of the grant of the patent:
**05.08.2026 Bulletin 2026/32**

(21) Application number: **23797846.5**

(22) Date of filing: **13.10.2023**

(51) International Patent Classification (IPC):
***A23L 2/60*** *(2006.01)* ***A23L 2/56*** *(2006.01)*
***A23L 2/52*** *(2006.01)*

(52) Cooperative Patent Classification (CPC):
**A23L 2/56; A23L 2/52; A23L 2/60;** A23V 2200/15; A23V 2250/24; A23V 2250/264

(86) International application number:
**PCT/GB2023/052660**

(87) International publication number:
**WO 2024/079479 (18.04.2024 Gazette 2024/16)**

(54) **FLAVOUR IMPROVEMENTS IN BEVERAGES**
GESCHMACKSVERBESSERUNGEN IN GETRÄNKEN
AMÉLIORATIONS D'ARÔME DANS DES BOISSONS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **13.10.2022 GB 202215104**

(43) Date of publication of application:
**20.08.2025 Bulletin 2025/34**

(73) Proprietor: **Sustain CO2 Limited**
**Horsforth**
**Leeds LS18 5PU (GB)**

(72) Inventor: **STORY, John Micheal**
**Leeds LS18 5PU (GB)**

(74) Representative: **Appleyard Lees IP LLP**
**G Mill**
**Dean Clough Industrial Park**
**Halifax HX3 5AH (GB)**

(56) References cited:
**AU-A1- 2015 203 721**
**US-A1- 2010 239 727**
**US-A1- 2015 064 321**
**US-B1- 6 368 651**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 601 482 B1

# Description

## Field

The present invention relates to a use of an additive to improve the flavour of a beverage. In particular, the present invention relates to improving the flavour of carbonated and non-carbonated beverages containing intense sweeteners by counteracting the off flavours of such intense sweeteners.

## Background

Sweet-tasting beverages, such as soft drinks, are generally considered to be relatively high sugar and high calorie products. A typical commercially available soft drink will normally comprise water, sugar and a natural or artificial flavouring, and such drinks are often carbonated. Consumers and public health bodies are becoming increasingly concerned about the sugar content of food and drink and in particular are concerned about the sugar content of soft drinks. Beverages comprising less sugar and/or fewer calories, which may be termed 'light', "diet" and/or 'sugar-free' products, are therefore growing in popularity. The increased consumption of high sugar content food and drink has been linked to health problems in many countries. For example, an over consumption of such products may cause obesity, may increase the risk of diabetes and other metabolic diseases and may promote the development of dental caries. Reduced-sugar or sugar-free soft drinks may of course be particularly popular with consumers who suffer from diabetes.

Considering the drawbacks associated with high sugar beverages, it would be desirable to provide a beverage having a reduced sugar content. However, "natural" sugar (such as sucrose) is a key component in many beverage products and provides the familiar and appealing sweetness that consumers expect from such products. Reduced sugar or sugar-free beverages (which may be known as "diet" beverages) usually include intense sweeteners such as aspartame to provide the level of sweetness which consumers expect from soft drinks. These intense sweeteners provide a high level of sweetness at low concentration compared to sucrose and usually provide very few or no calories to the beverage and therefore to the consumer. Therefore the use of intense sweeteners may address the problems associated with high levels of sugar (sucrose) in beverages.

However, many consumers believe that such intense sweeteners introduce other flavours into beverages in addition to sweetness. These flavours are generally undesirable and may be termed "off flavours". These off flavours limit the popularity of diet beverages among consumers who prefer the taste of the original full-sugar versions. Therefore the potential to beneficially affect the health of consumers may be limited by the taste of such diet beverages containing intense sweeteners.

It would therefore be beneficial if diet beverages could be provided which do not have these off flavours due to the presence of intense sweeteners. It would also be beneficial if the flavour perception of beverages generally could be improved, particularly carbonated beverages.

WO 2008/065401 A1 discloses the use of a control agent comprising a polyoxyethylene sorbitan fatty acid ester or a polyethylene glycol fatty acid ester to reduce foaming of certain types of acidulated carbonated beverage.

WO 2015/033118 A1 discloses the use of polyglycerol fatty acid esters as a carbon dioxide control agent in carbonated beverages.

US6368651 B1 relates to the use of at least one taste modifying ingredient to modify at least one taste characteristic imparted by N-[N-(3,3-dimethylbutyl)-L-alpha-aspartyl]-L-phenylalanine 1-methyl ester, or neotame, compositions containing the same, and use of modified forms of neotame that possess an improved taste, wherein at least one taste characteristic imparted by neotame is positively affect by the modification of neotame.

## Summary of the Invention

It is one aim of the present invention, amongst others, to provide a use of an additive in a beverage that addresses at least one disadvantage of the prior art, whether identified here or elsewhere, or to provide an alternative to existing beverages. For instance, it may be an aim of the present invention to provide a beverage with an improved flavour compared to a similar beverage which does not comprise the specified additives.

According to aspects of the present invention, there is provided a use as set forth in the appended claims. Other features of the invention will be apparent from the dependent claims, and from the description which follows.

According to a first aspect of the present invention, there is provided a use of an additive for improving the flavour of a beverage, wherein the additive is selected from:

a polyoxyethylene sorbitan fatty acid ester; or
a polyglycerol fatty acid ester
wherein the beverage contains an intense sweetener selected from aspartame, acesulfame K, sucralose and stevia;

wherein the improvement of the flavour of the beverage is a reduction in the off-flavour and/or undesirable aftertaste of the intense sweetener; or

wherein the improvement of the flavour of the beverage quickens the onset of sweetness perception in a consumer of the beverage;

wherein the additive is present in the beverage in an amount of 0.05 mg/l to 50 mg/l.

The invention is defined by the appended set of claims.

The present inventors have surprisingly found that the incorporation of such additives in beverages provides an improvement in flavour perception of a consumer of the beverage compared to control beverages which do not contain such additives but otherwise have the same composition. Some examples of this group of additives have been previously found to improve the retention of carbon dioxide in acidulated carbonated beverages, as described in WO 2008/065401 A1 and WO 2015/033118 A1. However, the flavour improvement achieved by the present invention is considered to be distinct from and in addition to any improvement in carbon dioxide retention obtained by using these additives. Without being bound by theory, it is believed that the improvement in flavour provided by the additive is achieved by masking or removing certain off flavours found in the beverage. Additionally or alternatively, the improvement in flavour of the beverage may be a reduction of an undesirable or harsh aftertaste in the beverage. Such an aftertaste may, for example, be introduced into the beverage by an intense sweetener. The reduction in off-flavours or aftertaste may be due to the specified additives encapsulating to a certain extent certain components of the beverage, such as intense sweetener compounds. The improvement in flavour is suitably measured against a control beverage using blind taste testing by a panel of tasters. The improvement in flavour is suitably obtained by improving the flavour of the beverage in at least one flavour category of such blind taste testing.

*Beverage types*

The beverage in which the additive is used may be a carbonated beverage or a non-carbonated beverage. The beverage may be an acidulated beverage or a non-acidulated beverage. The beverage may be an alcoholic beverage or a non-alcoholic beverage.

In embodiments wherein the beverage is a carbonated beverage, the additive may also improve the carbon dioxide retention and/or reduce foaming in the beverage, as well as providing the improvement in flavour. In such embodiments, the improvement in flavour is not an increase in fizziness of the beverage or an increase in acid perception which may be due to increased amounts of carbon dioxide in the beverage.

The carbonated beverage may be a non-alcoholic carbonated beverage or an alcoholic carbonated beverage.

The carbonation of the beverage may be provided artificially, i.e. by the addition of carbon dioxide to the beverage or a beverage precursor. The addition can be to a non-carbonated beverage or beverage precursor or to a naturally carbonated beverage or beverage precursor, for example a fermented beverage or beverage precursor.

The beverage may be artificially carbonated heavily, as in the case of very fizzy beverages such as cola drinks, or may be artificially carbonated lightly.

Carbon dioxide may be the sole gas present or may be part of a gas mixture, for example carbon dioxide with a second gas, preferably an inert gas, for example nitrogen. The second gas is preferably less soluble than carbon dioxide, and preferably substantially insoluble, in the beverage. Preferably the second gas substantially does not undergo disproportionation or Ostwald ripening in the beverage.

In such carbonated beverages, and by virtue of the carbon dioxide present (forming carbonic acid in water), the beverage may be acidic. However, the beverage may be acidulated. By the term "acidulated" we mean that it contains an additional acid of the type to be found in a "tangy" beverage. Examples may include phosphoric acid, and food acids (sometimes called "wholesome acids") such as citric acid, malic acid, lactic acid fumaric acid and tartaric acid. Fruit, fruit juices and fruit extracts contain food acids and so beverages containing the same are considered to be acidulated.

In such embodiments wherein the beverage is an acidulated carbonated beverage, the pH of the beverage is suitably in the range from 2 to 6.9, preferably from 2.5 to 6, as measured by a standard pH meter at 23 °C used as recommended by the manufacturer.

In some embodiments, the beverage may be carbonated, non-acidulated and non-alcoholic. For example, the beverage may be water with gas, such as soda water, carbonated mineral water or carbonated flavoured water.

In some embodiments, the beverage is non-alcoholic. Such beverages may be referred to as soft drinks. The beverage may be a non-alcoholic acidulated carbonated beverage, as described above. For example, the beverage may be a cola drink, orange drink, lemon drink, lemonade, combination fruit-based soft drink, tonic water, root beer, ginger ale, ginger beer or "energy" drink.

In some embodiments, the beverage comprises caffeine. The beverage may be considered an "energy" beverage comprising a high level of caffeine. The "energy" beverage may comprise at least 150 mg/l of caffeine, preferably at least 200 mg/l, for example at least 250 mg/l.

The "energy" beverage discussed above may comprise one or more additional ingredients selected from taurine, glucuronolactone guarana, yerba mate, açaí, ginseng, carnitine, creatine, and ginkgo biloba. In such embodiments the beverage suitably comprises taurine. The beverage may comprise at least 200 mg/l of taurine, preferably at least 300 mg/l, for example at least 350 mg/l.

In some embodiments, the beverage may be clear; that is to say it is preferably not cloudy and/or turbid and/or opaque. Preferably the clear beverage does not contain a hydrophobic clouding agent, as discussed below.

In some embodiments the beverage comprises a water insoluble component. In such embodiments, the beverage may be a cloudy and/or opaque beverage. Such beverages may be cloudy as a result of having a high solids content. For example, the beverage may comprise a relatively high level of solids derived from fruit ingredients. Therefore the cloudy and/or opaque beverage may be a fruit juice drink. The fruit juice drink may be derived from comminuted fruit or from fruit juice. In such embodiments, the beverage is suitably non-carbonated. Alternatively, in such embodiments the beverage may be carbonated.

The beverage may be cloudy and/or opaque due to the presence of a clouding agent and/or the formation of an emulsion. Suitable clouding agents may be sterol esters, stanol esters or esters of wood rosins. Such beverages may not contain fruit. In such embodiments, the beverage is suitably non-carbonated. Alternatively, in such embodiments the beverage may be carbonated.

Preferably the beverage is substantially fat-free.

Such non-alcoholic beverages include beverages having a very small amount of alcohol, for example less than 0.5 % wt/wt ethanol.

In some embodiments, the beverage is alcoholic. The beverage may be alcoholic, typically comprising 3-9% wt/wt ethanol. Examples include beer (including lager), cider and so-called "alcopops", which are often carbonated blends of vodka or other spirits, with fruit flavourings, or may be a hard seltzer. The beverage may be lightly alcoholic, typically having 0.1-3% wt/wt ethanol. Examples include shandy and certain fermented types of root beer, ginger beer and lemonade. By "beer" herein we mean any fermented starch-based beverage, especially any fermented malt beverage, including bitters, lagers, stouts, ales, wheat beers, lambic beers, typically having an alcohol content below 12% by volume.

*Bulk sweeteners*

The beverage may be a "regular" beverage comprising one or more of the bulk sweeteners. Suitable bulk sweeteners may be selected from one or more of sucrose, invert sugar syrup, glucose, fructose, high fructose corn syrup or maltodextrin. The bulk sweetener may be selected from sucrose, glucose or fructose. For example, the beverage may contain sucrose or high fructose corn syrup.

*Intense sweeteners*

Instead of or in addition to the bulk sweeteners discussed above, the beverage contains an intense sweetener. An intense sweetener is known in the art as an ingredient which provides a much higher sweet taste perception than sugar (i.e. sucrose). Therefore intense sweeteners are used in much lower amounts in food and beverages than bulk sweeteners such as sucrose to provide a similar sweetness.

The intense sweetener is selected from aspartame, acesulfame K, sucralose and stevia. The intense sweetener may be selected from aspartame, acesulfame K and stevia.

In some embodiments, the intense sweetener is aspartame.

The beverage may be a "diet" beverage comprising one or more of said intense sweeteners. Such diet beverages suitably contain no bulk sweetener or a low amount of bulk sweetener, for example sucrose or high fructose corn syrup. Therefore in some embodiments the beverage does not contain sugar / bulk sweetener. Suitably the beverage comprises one or more of the intense sweeteners described above and does not contain sugar / bulk sweetener.

Some intense sweeteners provide certain flavours to a food or beverage in which they are incorporated, in addition to the increase in sweetness. These additional flavours may be considered to be "off flavours", so called due to such flavours being either unpleasant to a taster or consumer or at least undesirable in a particular food or beverage. The additional flavour may be an undesirable aftertaste, which may be described as a harsh aftertaste. It may be particularly undesirable to have such flavours from the intense sweetener in the beverages discussed herein, such as diet carbonated beverages. The inventors have found that the additives defined herein may be particularly effective in reducing the off flavours / aftertaste of intense sweeteners in beverages, especially carbonated beverages. Without being bound by theory, it is believed that the additives interact with and possible at least partially encapsulate the intense sweeteners in the beverage such that the taste perception of the intense sweeteners is changed, reducing off flavours whilst maintaining sweetness.

The improvement in the flavour of the beverage provided by the use of the additive of this first aspect may involve a reduction in a metallic taste of a beverage comprising an intense sweetener, compared to a similar beverage which does

not contain the additive. For example, the use may provide a reduction in the metallic taste of a beverage comprising aspartame.

The improvement in the flavour of the beverage provided by the use of the additive of this first aspect may involve quickening the onset of sweetness perception in a consumer of a beverage comprising an intense sweetener, compared to a similar beverage which does not contain the additive. For example, the use may provide a quickening the onset of sweetness perception in a consumer of a beverage comprising aspartame, sucralose, suitably aspartame. In principle the beverage may contain vitamins, for example one or more of A, B, C, D, E and K group vitamins. Vitamins may be added in addition to vitamins present in other components, such as fruit juice. Water-soluble vitamins B and C are very suitable components of the beverage. Fat soluble vitamins A, D, E and K are less so.

Preferably vitamin E or derivatives thereof are not present in the beverage. Preferably vitamins A and K, or derivatives thereof, are not present in the beverage.

*The additive*

This first aspect of the present invention relates to the use of an additive selected from:

a polyoxyethylene sorbitan fatty acid ester; or

a polyglycerol fatty acid ester.

In some preferred embodiments, the additive is a polyoxyethylene sorbitan fatty acid ester.

The additive is present in the beverage in an amount of at least 0.05 mg/l, preferably at least 0.08 mg/l, preferably at least 0.1, preferably at least 0.2 mg/l. In certain embodiments it is present in an amount of at least 0.5 mg/l, especially at least 1 mg/l.

The additive is present in an amount of up to 50 mg/l, preferably up to 29 mg/l, preferably up to 20 mg/l or up to 10 mg/l.

The additive is present in the beverage in an amount of from 0.05 to 50 mg/l. The additive may be present in an amount of from 0.1 to 50 mg/l or from 0.1 to 25 mg/l. The additive may be present in an amount of from 1 to 50 mg/l or from 1 to 25 mg/l.

Such amounts refer to total amounts of additive present, when more than one such additive is present in the beverage.

The above amounts may apply particularly when the beverage is non-alcoholic, especially when the beverage is a carbonated beverage.

Different beverages may require different amounts of additive in order to obtain a desired level of flavour improvement. For example, carbonated water may require less additive than cola beverages. Also, diet beverages comprising intense sweeteners may require more additive than regular (full sugar) beverages. Furthermore, cloudy beverages may also require higher amounts of additive than other types of beverage in order for the desired flavour improvement to be achieved.

In embodiments where the carbonated beverage is alcoholic, the additive is present in an amount of from 0.1 to 50 mg/l, from 0.1 to 25 mg/l, from 1 mg/l to 20 mg/l, preferably from 4 mg/l to 16 mg/l, preferably from 7 mg/l to 13 mg/l.

Suitably the additive has a HLB in the range 7-16, preferably 7-14, more preferably 7-13. In some embodiments, the additive has a HLB in the range 8-12 or 8-10.

The desired HLB value may be that of a single additive or may be achieved by selection of two or more additives which in combination - calculated as a weighted average taking into account their individual HLB values and their amounts in the blend - achieve the desired HLB value, within the preferred range 7-16. Therefore, a weighted average for additives $A^1$, $A^2$, $A^3$..... can be calculated using the equation:

$$\frac{(\text{mass of } A^1 \times \text{HLB of } A^1) + (\text{mass of } A^2 \times \text{HLB of } A^2) + (\text{mass of } A^3 \times \text{HLB of } A^3) + \ldots\ldots}{\text{mass of } A^1 + \text{mass of } A^2 + \text{mass of } A^3 + \ldots\ldots}$$

The HLB of the additives may be measured or calculated using standard methods known in the art.

*Polyoxyethylene sorbitan fatty acid esters*

In some embodiments, the additive is a polyoxyethylene sorbitan fatty acid ester. The polyoxyethylene sorbitan fatty acid ester suitably has the structure (I):

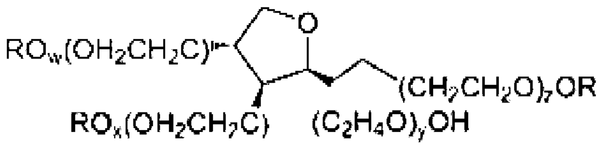

(I)

wherein w + x + y + z is from 4 to 30; and
wherein at least one R group is a $C_6$-$C_{33}$ fatty acid residue and each remaining R group is selected from H or a $C_6$-$C_{33}$ fatty acid residue.

Suitably the R groups which are fatty acid residues are $C_{10}$-$C_{22}$ fatty acid residues. Suitably the R groups which are fatty acid residues are selected from laurate, palmitate, stearate and oleate. Suitably from 1 to 3 of the R groups are such fatty acid residues.

In such embodiments, the additive may be selected from one or more of the following:

polyoxyethylene-(20)-sorbitan tristearate (common name Polysorbate 65) - HLB value 10.5-11.0;

polyoxyethylene-(20)-sorbitan trioleate (common name Polysorbate 85) - HLB value 11.0;

polyoxyethylene-(4)-sorbitan monolaurate (common name Polysorbate 21) - HLB value 13.3;

polyoxyethylene-(20)-sorbitan monostearate (common name Polysorbate 60) - HLB value 14.9;

polyoxyethylene-(4)-sorbitan monostearate (common name Polysorbate 61) - HLB value 9.6;

polyoxyethylene-(20)-sorbitan monooleate (common name Polysorbate 80) - HLB value 15.0;

polyoxyethylene-(5)-sorbitan monooleate (common name Polysorbate 81) - HLB value 10.0.

HLB number is defined in terms of the widely used method of Griffin. In accordance with this method the molecular weight of the ethylene oxide part of the respective compound is calculated. For example if there are 20 moles of ethylene oxide the molecular weight of that component is 880 (20 x 44). To this number is added the molecular weight of the fatty acid residue (e.g. monooleate, dilaurate etc.), this essentially gives an overall molecular weight. The molecular weight of the ethylene oxide part is expressed as a percentage of the overall molecular weight, and the resulting percentage value is divided by 5, to yield the HLB value (thus, if the ethylene oxide represents 55% of the total compound weight, the HLB value of the respective compound is 11).

Suitably the additive is polyoxyethylene-(20)-sorbitan tristearate or polyoxyethylene-(20)-sorbitan trioleate or a mixture thereof. Preferably the additive is polyoxyethylene-(20)-sorbitan tristearate (Polysorbate 65).

*Polyethylene glycol fatty acid esters*

In some embodiments, the additive may further comprise a polyethylene glycol fatty acid ester. The polyethylene glycol fatty acid ester is suitably a reaction product of a polyethylene glycol with a fatty acid. Suitable polyethylene glycol fatty acid esters comprise from 1 to 4 fatty acid residues and from 1 to 20 ethylene glycol units, suitably from 1 to 3 fatty acid residues and from 1 to 14 ethylene glycol units. Suitably the fatty acid residues are $C_6$-$C_{33}$ fatty acid residues or $C_{10}$-$C_{22}$ fatty acid residues. Suitably the polyethylene glycol fatty acid ester comprises one or two such fatty acid residues. Suitably the fatty acid residues are selected from laurate, palmitate, stearate and oleate.

Preferably the polyethylene glycol (PEG) part of the polyethylene glycol fatty acid ester is a low molecular PEG moiety, for example a PEG 50 - PEG 2000 moiety, preferably a PEG 100 - PEG 1000 moiety.

In such embodiments, the polyethylene glycol fatty acid ester additive may be selected from one or more of PEG 200 monooleate, PEG 300 monooleate, PEG 400 dioleate, PEG 200 monolaurate, PEG 300 dilaurate, PEG 400 dilaurate, PEG 200 monostearate, PEG 300 monostearate, PEG 400 distearate, PEG 600 distearate and PEG 600 dioleate. In said compounds the number is used in the art to represent an approximate average molecular weight of the PEG part of the polyethylene glycol fatty acid ester. The skilled person would appreciate that these polyethylene glycol fatty acid esters are necessarily mixtures of similar compounds having different numbers of PEG units which provide the approximate average molecular weight denoted above.

Preferably the additive (either a polyoxyethylene sorbitan ester or a PEG ester), used in the present invention comprises at least one mole of ethylene oxide per mole of ester; preferably at least 2, preferably at least 3, more preferably at least 4. Preferably it contains up to 36 moles of ethylene oxide per mol of fatty acid ester, preferably up to 24, preferably up to 12, most preferably up to 7.

The presence, in the polyoxyethylene sorbitan ester or PEG ester, of other alkylene oxide moieties such as propylene oxide, is not excluded. However, some polyoxyethylene component must be present, and the polyoxyethylene component itself preferably conforms to the molar definitions given above, without reference to any additional alkylene oxide component. Most preferably, however, the polyoxyethylene component contains ethylene oxide units, and no other alkylene oxide units.

Preferably the fatty acid residues of the defined compounds are residues of $C_6$-$C_{33}$ fatty acids, preferably $C_{10}$-$C_{22}$ fatty acids. The fatty acids may be saturated (for example lauric, stearic) or unsaturated (for example oleic). Typically the compound may have from one to the saturation number of fatty acid residues (the compound being, for example a monooleate, dioleate, monostearate, distearate, monolaurate or dilaurate; or, in the case of a polyoxyethylene sorbitan ester compound, being a trioleate or tristearate, for example).

It will be appreciated that many of the parameters expressed above for an additive of the present invention are mean values, given that the additives are distributions of compounds. For example, molecular weight, HLB and number of carbon atoms per molecule or residue may be mean values. This similarly applies to the degree of ethoxylation, given that ethoxylation produces a distribution of compounds with different numbers of ethylene glycol units.

*Polyglycerol fatty acid esters*

In some embodiments, the additive is a polyglycerol fatty acid ester. The polyglycerol fatty acid ester may be an esterification reaction product of a) a triglyceride, or a fatty acid, or a methyl ester of a fatty acid, and b) a polyhydric alcohol which comprises b1) a polyglycerol having at least 3 glycerol units, and b2) glycerol and / or diglycerol.

Component a) is suitably an oil or a fatty acid of plant origin. Preferably component a) is a naturally occurring oil, or fat, whose structure has not been chemically modified prior to the esterification reaction. In some embodiments, component a) is an oil (being a liquid at ambient temperature of 18°C) of plant origin. In some embodiments, component a) is a fat (i.e. solid, semi-solid or paste at ambient temperature of 18°C) of plant origin. For example, component a) may be the triglyceride palm kernel oil which is a paste with a melting point of approximately 24°C.

Batches of triglycerides may vary in their average molecular weight and in their distribution of components, but the values stated in this specification define typical situations.

The triglyceride, or the parent triglyceride of the fatty acid or methyl ester of a fatty acid, may be from a single triglyceride source, for example a single named oil or fat, or from a plurality of triglyceride sources, blended.

The fatty acid moieties of the triglyceride, or of the fatty acid or of the methyl ester of a fatty acid, each have an R-CO- moiety, where R represents a hydrocarbyl moiety. Preferably there are at least 6 carbon atoms in the R-CO- moiety, preferably at least 8 carbon atoms; preferably at least 10 carbon atoms; most preferably at least 12 carbon atoms. Preferably there are up to 36 carbon atoms in the R-CO- moiety, preferably up to 28 carbon atoms, preferably up to 24 carbon atoms, more preferably up to 20 carbon atoms.

Suitable fats or oils for use in the esterification reaction may be selected from one or more of the following: almond oil, babassu oil, borage oil, canola oil, cocoa butter, coconut oil, corn oil (maize oil), cottonseed oil, flaxseed oil, grape seed oil, hazelnut oil, illipe, oat oil, olive oil, palm oil, palm olein, palm kernel oil, peanut oil, rapeseed oil, safflower oil, sesame oil, shea nut, soybean oil, tucum oil, sunflower oil, walnut oil, apricot oil, sweet almond oil, avocado oil, baobab oil, blueberry seed oil, calendula oil, camellia oil, cherry kernel oil, cranberry seed oil, hemp oil, jojoba oil, kukur nut oil, macadamia nut oil, manketti oil, melon seed oil, moringe oil, peach kernel oil, pistachio oil, raspberry seed oil, rice bran oil, rosehip oil, soya oil, wheatgerm oil, yangu oil; and their hydrogenated derivatives. A blend of oils or fats may be employed. Therefore component a) may be selected from these fats and oils.

Suitably, component a) is selected from palm kernel oil, coconut oil or babassu oil, or a mixture thereof. Suitably, component a) is selected from palm kernel oil or coconut oil, or a mixture thereof.

Fatty acids or methyl esters of fatty acids, which may be used in the esterification reaction, may include fatty acids or methyl esters derived from any of the fats or oils described above.

Fatty acids which may be used in the esterification reaction, or which may be regarded as 'delivered' to the esterification reaction by a fat or oil, may be selected from one or more of the following: caproic acid, caprylic acid, capric acid, lauric acid, myristic acid, palmitic acid, palmitoleic acid, stearic acid, oleic acid, ricinoleic acid, vaccenic acid, linoleic acid, alpha-linolenic acid (ALA), gamma-linolenic acid (GLA), arachidic acid, gadoleic acid, arachidonic acid (AA), EPA (5,8,11,14,17-eicosapentaenoic acid), behenic acid, erucic acid, DHA (4,7,10,13,16,19-docosahexaenoic acid), and lignoceric acid; and methyl esters of such acids. A blend of fatty acids and / or fatty acid methyl esters may be employed.

Especially preferred acids include caproic acid, caprylic acid, capric acid, lauric acid, myristic acid, palmitic acid, stearic acid, linoleic acid, alpha-linolenic acid (ALA) - and gamma-linoleic acid (GLA). Especially preferred methyl esters

may be methyl esters of such fatty acids. Oils or fats which yield such fatty acids are preferred oils or fats. Especially preferred oils are flax seed (flax) oil (which can yield alpha-linolenic acid, ALA), borage seed (borage) oil (which can yield gamma-linolenic acid, GLA) and palm kernel oil (which can yield palmitic acid).

The fatty acid moieties, whether as free acids or methyl esters thereof or as components of a triglyceride, may be saturated or unsaturated. If unsaturated they may suitably have from 1 to 6 double bonds, preferably 1 to 3 double bonds. The fatty acids or methyl esters or parent oils or fats may have been hydrogenated.

In one embodiment the fatty acid moieties, whether free acids or methyl esters thereof or as a component of a triglyceride, are saturated fatty acid moieties having an average molecular weight of less than 282 g/mol, preferably less than 260 g/mol, preferably less than 240 g/mol.

In one embodiment the fatty acid moieties, whether free acids or methyl esters thereof or as a component of a triglyceride, are unsaturated fatty acid moieties having an average molecular weight of less than 320 g/mol, preferably less than 300 g/mol.

Batches of polyglycerols may vary in their average molecular weight and in their distribution of components but the values stated in this specification define typical situations or typical average values.

Preferably the polyglycerol component b1) comprises at least 50 %wt of polyglycerol compounds composed of 3 to 6 glycerol units, preferably at least 60 %wt, preferably at least 70 %wt, most preferably at least 85 %wt.

Preferably, the polyglycerol component b1) comprises polyglycerol-4, polyglycerol-5, polyglycerol-6 or a mixture thereof. Suitably component b1) consists essentially or consists of polyglycerol-4, polyglycerol-5, polyglycerol-6 or a mixture thereof.

In some embodiments, the polyglycerol component b1) comprises polyglycerol-4. Suitably the polyglycerol component b1) is provided by polyglycerol-4.

Polyglycerol-4 is a commercially available product sold under that name. Polyglycerol-4 is a distribution of a polyglycerol compounds in which the average molecular weight of the polyglycerol is centred on polyglycerol-4.

In such embodiments, the polyglycerol component b1) comprises at least 20 %wt of the compound tetraglycerol, preferably at least 25 %wt.

Triglycerol may also be a significant component, even when the average molecular weight of the polyglycerol is centred on polyglycerol-4. Preferably the polyglycerol component b1) constitutes at least 20 %wt of the compound triglycerol, preferably at least 25 %wt.

Preferably the compound tetraglycerol is present in the polyglycerol component b1) in a higher amount by weight than the compound pentaglycerol.

In such embodiments, the compound tetraglycerol may be the single compound present in the largest proportion by weight in the polyglycerol component b1).

In commercial sources of polyglycerol-4, which may be used in the present invention as a preferred component b1), the proportions by weight of compounds is typically as follows:

triglycerol, 20-50 %wt

tetraglycerol, 20-50 %wt

higher polyglycerols, 15-40 %wt in total

other compounds, not more than 20 %wt, typically less than 12 %wt.

Higher polyglycerols herein means polyglycerol compounds formed of 5 or more glycerol units.

The other compounds may include water and diglycerol. Small amounts of glycerol may sometimes be present.

In some embodiments, the polyglycerol component b1) comprises polyglycerol-5. Suitably the polyglycerol component b1) is provided by polyglycerol-5.

In such embodiments, the polyglycerol component b1) comprises at least 20 %wt of the compound pentaglycerol, preferably at least 25 %wt or at least 30 wt%.

In such embodiments, the compound pentaglycerol is present in the polyglycerol component b1) in a higher amount by weight than the compound tetraglycerol.

In such embodiments, the compound pentaglycerol may be the single compound present in the largest proportion by weight in the polyglycerol component b1).

In some embodiments, the polyglycerol component b1) comprises polyglycerol-6. Suitably the polyglycerol component b1) is provided by polyglycerol-6.

In such embodiments, the polyglycerol component b1) comprises at least 20 %wt of the compound hexaglycerol, preferably at least 25 %wt or at least 30 wt%.

In such embodiments, the compound hexaglycerol is present in the polyglycerol component b1) in a higher

amount by weight than the compound tetraglycerol.

In such embodiments, the compound hexaglycerol may be the single compound present in the largest proportion by weight in the polyglycerol component b1).

When glycerol and/or diglycerol is/are present in the polyglycerol source they may supply some or all of the component b2). However the amount of glycerol and diglycerol in a polyglycerol source is generally low. Therefore, in such embodiments, it is generally required to supply glycerol and/or diglycerol to reach the desired amount. This may be done by simple addition of glycerol and/or diglycerol. When a triglyceride is used it may occur by the liberation of glycerol in the esterification reaction.

Preferably the average molecular weight of the polyglycerols in component b1), having at least 3 glycerol units, is in the range 220-500 g/mol, preferably 230-450 g/mol, preferably 240-420 g/mol, preferably 250-400 g/mol, preferably, preferably 260-370 g/mol, 280-350 g/mol, most preferably 300-330 g/mol.

Preferably glycerol constitutes at least 60 %wt of the component b2), preferably at least 70 %wt, preferably at least 80 %wt.

Preferably the ratio by weight of the component b2) to component b1) is one part b2) to at least 4 parts b1), preferably one part b2) to at least 6 parts b1), and most preferably at least one part b2) to at least 8 parts b1).

Preferably the ratio by weight of the component b2) to component b1) is one part b2) to up to 24 parts b1), preferably one part b2) to up to 20 parts b1), and most preferably one part b2) to up to 16 parts b1).

Preferably the components b1) and b2) make up at least 50 %wt of the functional fluid, preferably at least 60 %wt, preferably at least 70 %wt, preferably at least 80 %wt, preferably at least 90 %wt.

When a triglyceride a) is employed to make the additive, the reaction may be regarded as an interesterification reaction. As noted above glycerol liberated in the reaction may provide some or all of component b2). Preferably it provides all of the glycerol comprised by component b2). Glycerol could be removed or added. Preferably, no glycerol is removed. Preferably, when a triglyceride is used, no glycerol is added.

When a fatty acid or fatty acid methyl ester is used for the esterification reaction to make the additive, component b2) is added to the reaction mixture, suitably in such an amount as to satisfy at least one of the b1) : b2) definitions given above.

When a triglyceride is used, preferably the molar ratio of the polyglycerol to the triglyceride in the reaction mixture, based on average molecular weights, is 0.5 - 5 to 1, preferably 1 - 4 to 1, preferably 1.5 - 3 to 1, most preferably 2 - 2.5 to 1. Average molecular weight may be determined by normal measures. In the case of the triglyceride this may be from GC results. In the case of polyglycerol the raw material specifications may be used.

When a fatty acid or derivative is used, the molar ratio of the polyglycerol to the fatty acid in the reaction mixture, based on average molecular weights, is 0.2 - 3 to 1, preferably 0.3 - 2 to 1, preferably 0.5 - 1.5 to 1, most preferably 0.7 - 1.3 to 1.

"Esterification" herein includes transesterification or interesterification.

Standard esterification conditions may be used for the manufacture of the glycerol ester additive. Suitably reactions which employ triglycerides are carried out under alkaline conditions (e.g. by addition of sodium hydroxide or potassium hydroxide) and at elevated temperature, for example at least 150°C, preferably 200-250°C. Suitably reactions which employ fatty acids added to the reaction mixture are carried out under acidic conditions (e.g. by addition of sulphonic acid or orthophosphoric acid) and at elevated temperature, for example at least 150°C, preferably 200-250°C.

Preferably the process is a one-pot process, even when it employs a triglyceride.

Preferably the additive is the product of the esterification reaction, without work up (other than neutralisation of any catalyst present). Preferably it is a liquid at ambient temperature of 18°C.

Preferably the additive comprises a plurality of esters, formed from the range of triglycerides present in oil or fat (or from the range of fatty or methyl esters obtained from such triglycerides), and the range of polyglycerol compounds present in an as-supplied "polyglycerol" source. The additive may comprise many esters, for example over 20 ester compounds, or over 50 ester compounds, or over 100 ester compounds. Suitably the additive comprises monoglycerol fatty acid esters, triglycerol fatty acid esters and tetraglycerol fatty acid esters, suitably according to the amounts of the different glycerol and polyglycerol components used in the esterification reaction. The polyglycerol fatty acid ester additive may comprise monoglycerol laurate, triglycerol laurate and tetraglycerol laurate.

In some embodiments, the polyglycerol fatty acid ester additive is the reaction product of palm kernel oil or coconut oil (component a)) and polyglycerol-4, polyglycerol-5 or polyglycerol-6 (component b1)), wherein the triglyceride palm kernel oil or coconut oil provides glycerol (component b2)). Suitably the polyglycerol fatty acid ester additive is the reaction product of palm kernel oil or coconut oil and polyglycerol-4. Suitably the polyglycerol fatty acid ester additive is the reaction product of palm kernel oil and polyglycerol-4. One example of a suitable polyglycerol fatty acid ester additive is the product Durosoft PG4L-SG supplied by Stephenson Group Limited. The HLB of this product is in the range 8.0-10.0.

The additives described herein are suitably used in their as-supplied commercial formulations which may be expected to contain a distribution of related compounds, but with the named additive being the major component (i.e. providing at least 51wt% of the weight of the respective formulation).

In some embodiments, the additive is selected from polyoxyethylene-(20)-sorbitan tristearate (Polysorbate 65) or a polyglycerol fatty acid ester additive which is the reaction product of palm kernel oil or coconut oil and polyglycerol-4.

In the use of this first aspect, the additive may be added to the beverage at any stage of the process used to make the beverage. For example, the additive could be added to the finished beverage before bottling or canning the beverage. Similarly, the additive could be added to a beverage in a dispensing apparatus, during or after the beverage has been formed by mixing a concentrate or syrup with water and/or carbonated water. Alternatively, the additive can be added to a beverage concentrate or beverage precursor before water and/or carbonation is added to form the finished beverage. Suitably, the additive is added to a concentrate or precursor of the beverage. The additive may be added to a flavour system which is used to produce such a beverage concentrate.

The beverage concentrate may be used in the manufacture of a finished beverage by mixing with carbonated water and then bottling / canning for sale and distribution and for later consumption. Alternatively, the beverage concentrate may be supplied to customers (such as bars or restaurants) for mixing with carbonated water (or mixing with water and then injecting with carbon dioxide) to form the finished beverage at the point of dispensing the beverage to a consumer.

The additive is suitably present in the concentrate in an amount which would produce the concentrations of the additive in the finished beverage discussed above.

Suitably the additive is added to the beverage, or to a precursor thereof (including a concentrate) as a liquid. The additive may itself be a liquid at ambient temperature, or it may be liquefiable, for example by heating it in order to melt it, or by dissolving or dispersing it in a liquid carrier.

In some embodiments, the additive is added to the beverage in an additive concentrate. The additive concentrate suitably comprises a high concentration of the additive and is readily dispersible / soluble in a beverage concentrate and/or a beverage.

In embodiments wherein the beverage is a carbonated beverage, in addition to the improvement in the flavour of the beverage provided by the use of this first aspect, the additive also preferably increases the retention of carbon dioxide in the beverage / reduces foaming of the beverage, particularly on pouring. The reduction in foaming means that foaming is significantly reduced when a carbonated beverage is delivered to a vessel, whether the vessel be a can or bottle in a filling plant, or a drinking vessel such as a glass or cup. This provides advantages in that less carbon dioxide is lost into the atmosphere during filling (giving economic and environmental benefit); and less carbon dioxide escapes from the beverage when it is poured into a drinking vessel (thereby giving better drinking quality). The improvement in retention of carbon dioxide means that carbon dioxide is retained for longer in the beverage in a container which has been opened, i.e. that such beverages do not go "flat" (lose their fizz) as quickly as known beverages without the additive.

In some preferred embodiments, there is provided a use of an additive for improving the flavour of a carbonated beverage comprising an intense sweetener selected from aspartame, acesulfame K, and stevia, wherein the additive is selected from:

polyoxyethylene-(20)-sorbitan tristearate (Polysorbate 65) or a polyglycerol fatty acid ester additive which is the reaction product of palm kernel oil or coconut oil and polyglycerol-4;

wherein the improvement of the flavour of the beverage is a reduction in the off flavour and/or undesirable aftertaste of the intense sweetener or wherein the improvement of the flavour of the beverage quickens the onset of sweetness perception in a consumer of the beverage;

wherein the additive is present in an amount of 0.05 to 50 mg/l, preferably 0.1 to 50 mg/l.

Suitably wherein the beverage does not contain sugar / bulk sweetener.

The following examples demonstrate how the present invention can be carried into effect.

## Examples

### Example Set 1 - Sensory Testing

Experiments to assess the effect of the additives discussed above on beverage flavour were carried out using commercially available Polysorbate 65 (polyoxyethylene-(20)-sorbitan tristearate, HLB 10.5, sold under the trade name Glycosperse TS-20 KFG, supplied by Azelis) and PKPG4 (the esterification reaction product of palm kernel oil and polyglycerol-4, Durosoft PG4L-SG supplied by Stephenson Group Limited).

Base beverage compositions were prepared with the following ingredients:

sodium benzoate - 0.15g/l;

citric acid - 1.5g/l;

sweetener - see Table 1;

water - balance.

The base beverages having different sweeteners were then either treated with the PS-65 additive (referred to as additive A in Table 1) or the PKPG4 additive (referred to as additive B in Table 1) to provide test beverages 1-10, or with the same amount of water to provide control beverages 1-10 (see Table 1 for details and amounts).

An aqueous dispersion of Polysorbate 65 or PKPG4 was prepared by adding it to hot water at approximately 50°C, mixing and allowing the mixture to cool to 20°C, to produce a 0.5% w/w aqueous dispersion. Appropriate quantities of this mixture were introduced by pipette into full 500 ml bottles of the beverages, the caps having been removed, then replaced tightly. The bottles were inverted 25 times using a smooth action, to obtain a uniform dispersion before allowing it to equilibrate for one hour at ambient temperature (20°C). Controls were treated in a similar way, but with 1.0 g of water being added to the beverages instead of the test solutions containing Polysorbate 65.

A panel of four tasters was asked to perform blind taste comparisons of the test and control beverages and then rate which beverage out of each pair of test and control beverages had the least aftertaste (or off-flavour). The panelists were asked to rank the level of intensity of the aftertaste from 0 to 10. Zero being no aftertaste and 10 being intense aftertaste. Table 1 shows the results. In the "Taste / Aftertaste" column, the number represents the average intensity score across the 4 panelists. The panel members rated the beverage as having the least undesirable or harsh aftertaste out of each pair of test and control beverages.

The results in Table 1 clearly show that the PS-65 and PKPG4 additives tested reduced the aftertaste / off-flavours of the beverages comprising intense sweeteners compared to the relevant control sample which does not comprise the additive. In each case of tests 3-10, test vs. control, the average aftertaste score given by the panelists was significantly lower for the test sample comprising the additive than for the control sample comprising no additive. Therefore these results demonstrate that the use of the additives of the present invention provided an improvement in the flavour of the beverages tested.

Table 1

| Beverage | Sweetener g/l | | | | | Additive mg/l | | Taste |
|---|---|---|---|---|---|---|---|---|
| | sugar | aspartame | acesulfame K | sucralose | stevia | PS-65 (A) | PKPG4 (B) | Aftertaste |
| Test 1 (A) | 106 | - | - | - | - | 1.50 | 0 | 0 |
| Control 1 | 106 | - | - | - | - | 0 | 0 | 0 |
| Test 2 (B) | 106 | - | - | - | - | 0 | 10.0 | 0 |
| Control 2 | 106 | - | - | - | - | 0 | 0 | 0 |
| Test 3 (A) | - | 0.3 | - | - | - | 1.50 | 0 | 3.5 |
| Control 3 | - | 0.3 | - | - | - | 0 | 0 | 5.75 |
| Test 4 (B) | - | 0.3 | - | - | - | 0 | 10.0 | 3.25 |
| Control 4 | - | 0.3 | - | - | - | 0 | 0 | 6 |
| Test 5 (A) | - | - | 0.3 | - | - | 1.50 | 0 | 3.75 |
| Control 5 | - | - | 0.3 | - | - | 0 | 0 | 7 |
| Test 6 (B) | - | - | 0.3 | - | - | 0 | 10.0 | 3.75 |
| Control 6 | - | - | 0.3 | - | - | 0 | 0 | 7 |
| Test 7 (A) | - | - | - | 0.1 | - | 1.50 | 0 | 4.75 |
| Control 7 | - | - | - | 0.1 | - | 0 | 0 | 7 |
| Test 8 (B) | - | - | - | 0.1 | - | 0 | 10.0 | 4.5 |
| Control 8 | - | - | - | 0.1 | - | 0 | 0 | 7 |
| Test 9 (A) | - | - | - | - | 0.1 | 1.50 | 0 | 6.25 |
| Control 9 | - | - | - | - | 0.1 | 0 | 0 | 9.5 |

(continued)

| Beverage | Sweetener g/l | | | | | Additive mg/l | | Taste |
|---|---|---|---|---|---|---|---|---|
| | sugar | aspartame | acesulfame K | sucralose | stevia | PS-65 (A) | PKPG4 (B) | Aftertaste |
| Test 10 (B) | - | - | - | - | 0.1 | 0 | 10.0 | 6.25 |
| Control 10 | - | - | - | - | 0.1 | 0 | 0 | 9.5 |

**Example Set 2 - Electronic Tongue Testing**

To further assess the effects of the additives on the taste of beverages, electronic tongue testing was carried out by Alpha MOS using an Astree electronic tongue system. This system uses chemically-sensitive field-effect transistor and conductivity measurements to detect organic and inorganic compounds which contribute to the taste of liquids and so provide an evaluation of the taste of test samples, for example salty, acid and umami characteristics. Such electronic tongue systems may provide a quantitative analysis of taste intensity characteristics and may provide objective taste measurements which can complement data obtained from sensory testing panels.

The objective of the testing was to identify whether the additives A and B (the PS-65 and PKPG4 additives described herein) have an influence on the taste of a beverage compared to a reference beverage which does not contain any agent.

The beverage samples tested were filtered water with added stevia as a sweetener (the samples with reference codes starting with "S") and filtered water with added aspartame and acesulfame K as sweeteners (the samples with reference codes starting with "A").

The additives A and B were added to the test samples in the amounts noted below in Table 2. The second letter of the sample reference code denotes whether the sample contains additive A or additive B. The number in the sample reference code indicates the concentration in mg/l of the additive in the sample.

The reference samples of each of the S-type or A-type samples are "SREF" and "AREF", respectively.

**Table 2**

| Sample | Sweetener g/l | | | Additive mg/l | |
|---|---|---|---|---|---|
| | aspartame | acesulfame K | stevia | PS-65 (A) | PKPG4 (B) |
| SREF | - | - | 0.1 | 0 | 0 |
| SA02 | - | - | 0.1 | 2 | 0 |
| SA05 | - | - | 0.1 | 5 | 0 |
| SA10 | - | - | 0.1 | 10 | 0 |
| SA15 | - | - | 0.1 | 15 | 0 |
| SA20 | - | - | 0.1 | 20 | 0 |
| SB02 | - | - | 0.1 | 0 | 2 |
| SB05 | - | - | 0.1 | 0 | 5 |
| SB10 | - | - | 0.1 | 0 | 10 |
| SB15 | - | - | 0.1 | 0 | 15 |
| SB20 | - | - | 0.1 | 0 | 20 |
| AREF | 0.16 | 0.16 | | 0 | 0 |
| AA02 | 0.16 | 0.16 | - | 2 | 0 |
| AA05 | 0.16 | 0.16 | - | 5 | 0 |
| AA10 | 0.16 | 0.16 | - | 10 | 0 |
| AA15 | 0.16 | 0.16 | - | 15 | 0 |
| AB02 | 0.16 | 0.16 | - | 0 | 2 |
| AB05 | 0.16 | 0.16 | - | 0 | 5 |
| AB10 | 0.16 | 0.16 | - | 0 | 10 |

(continued)

| Sample | Sweetener g/l | | | Additive mg/l | |
|---|---|---|---|---|---|
| | aspartame | acesulfame K | stevia | PS-65 (A) | PKPG4 (B) |
| AB15 | 0.16 | 0.16 | - | 0 | 15 |

The samples of Table 2 were analysed using the Astree electronic tongue system and Euclidian distances between the different samples were calculated to assess taste proximity between the samples: the lower the distance, the closer the taste. Principal component analysis (PCA) plots of the results are shown in Figures 1 and 3. Figure 1 shows the PCA plot of the "S" samples (filtered water with added stevia) and Figure 3 shows the PCA plot of the "A" samples (filtered water with added aspartame and acesulfame K).

Also, a Discrimination Index (DI in %) was determined between the samples. This indicator considers the average difference between the pairs of samples being compare, as well as the dispersion of each sample. The closer the index is to 100%, the higher the distance between the "centres of gravity" of the samples and the smaller the dispersion within groups. The DI helps to assess the significance of difference between the samples. Figure 2 shows the DI of the "S" samples (filtered water with added stevia), with the additive type and concentration noted in the chart, and also the calculated distance of the sample from the reference sample "SREF". Figure 4 shows the DI of the "A" samples (filtered water with added aspartame and acesulfame K), with the additive type and concentration noted in the chart, and also the calculated distance of the sample from the reference sample "AREF".

The Mean Standard Deviation (SD) and the Relative Standard Deviation(RSD) were calculated to assess the measurement repeatability. The calculated values for each sample are shown below in Tables 3 and 4.

Table 3

| Label | Mean SD | Mean RSD (%) |
|---|---|---|
| SA02 | 21 | 0.6 |
| SA0S | 24 | 0.7 |
| SA10 | 24 | 0.7 |
| SA15 | 23 | 0.7 |
| SA20 | 26 | 0.8 |
| SB02 | 15 | 0.4 |
| SB05 | 22 | 0.6 |
| SB10 | 18 | 0.5 |
| SB15 | 16 | 0.5 |
| SB20 | 19 | 0.5 |
| SREF | 27 | 0.8 |

$$RSD = \frac{SD}{\bar{x}} \times 100$$

With,

SD: Standard deviation
$\bar{x}$ : Mean value

Interpretation:

SD < 100: correct
SD < 30: good

**Table 4**

| Label | Mean SD | Mean RSD (%) |
|---|---|---|
| AA02 | 17 | 0.5 |
| AA05 | 13 | 0.4 |
| AA10 | 26 | 0.7 |
| AA15 | 22 | 0.6 |
| AB02 | 31 | 0.9 |
| AB05 | 26 | 0.7 |
| AB10 | 27 | 0.8 |
| AB15 | 17 | 0.5 |
| AREF | 18 | 0.5 |

$$RSD = \frac{SD}{\bar{x}} \times 100$$

With,

SD: Standard deviation
$\bar{x}$ : Mean value

Interpretation:

SD < 100: correct
SD < 30: good

The electronic tongue data shown in Figures 1 to 4 demonstrates that the samples comprising the additives A and B in different amounts provide the beverage samples with a quantitatively different taste than the reference samples, and each other. This supports the sensory panel data of Example Set 1 which identified significant differences (i.e. improvements) in the aftertaste / off-flavours of the beverages comprising the intense sweeteners, compared to the relevant control sample which does not comprise the additive.

**Example Set 3 - Further Sensory Testing**

Based on the data from the initial sensory panel, a further, more detailed study was conducted on additive A with a trained panel using a "Check All That Apply" (CATA) questionnaire. The panel size was n = 12 assessors, who had been basically trained according to DIN EN ISO 8586 and specially trained on the validation of flavours with modifying properties (FMP).

Test samples 1-3 were prepared by adding the intense sweetener and additive noted in Table 5 below to Evian® mineral water. The additive A was added to samples 2 and 3 as a 15 g/l and a 20 g/l aqueous solution, respectively, to provide the amount of active additive noted in the table.

**Table 5**

| Sample | Sweetener g/l | | | Additive mg/l |
|---|---|---|---|---|
| | aspartame | acesulfame K | stevia | PS-65 (A) |
| 1 (reference) | 0.22 | - | - | 0 |
| 2 | 0.22 | - | - | 2.25 |
| 3 | 0.22 | - | - | 3.00 |

The samples were tasted at room temperature (~21°C). The samples comprising the additive A (samples 2 and 3) were evaluated against the reference sample without the additive (sample 1).

Each assessor evaluated the sample themselves in a sensory booth (re-tasting was allowed). Each assessor received a questionnaire with attributes that the assessor may or may not feel applies to describe the difference between the test sample and the reference sample. If the assessor considers that the attribute in the questionnaire does apply then they simply tick whether the attribute in the test sample it is stronger or weaker than the reference sample. The specific attributes are shown in the example questionnaire below:

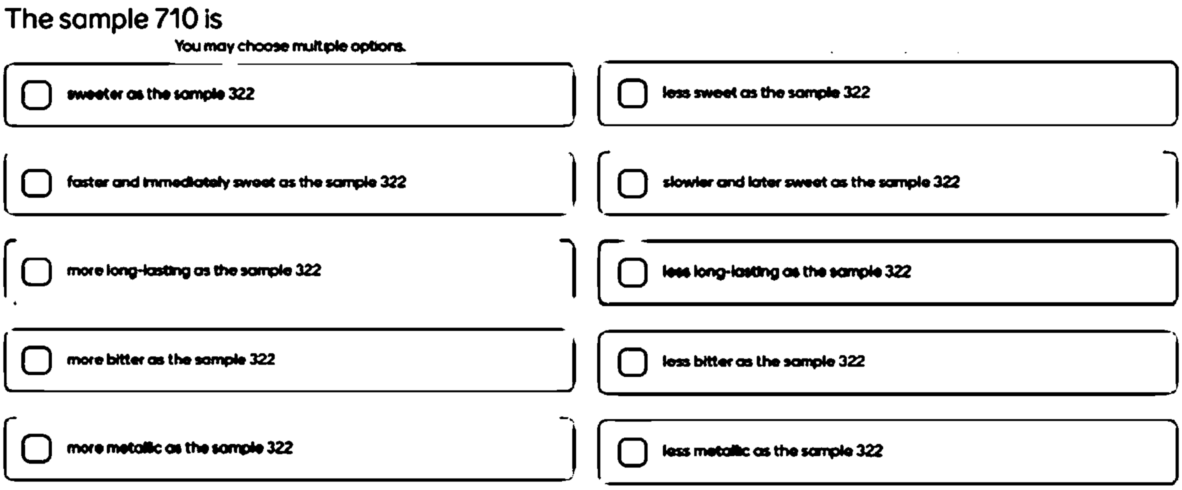

The sample 710 is

You may choose multiple options.

| | |
|---|---|
| ☐ sweeter as the sample 322 | ☐ less sweet as the sample 322 |
| ☐ faster and immediately sweet as the sample 322 | ☐ slowler and later sweet as the sample 322 |
| ☐ more long-lasting as the sample 322 | ☐ less long-lasting as the sample 322 |
| ☐ more bitter as the sample 322 | ☐ less bitter as the sample 322 |
| ☐ more metallic as the sample 322 | ☐ less metallic as the sample 322 |

From the results of this sensory testing, it appeared that additive A affects the onset of sweetness perception in the test samples. Aspartame is known to have a generally slower sweetness onset than sucrose. Bringing the sweetness onset of such an intense sweetener-containing beverage closer to that of a sucrose-containing beverage would be a desirable effect for a consumer, enabling the overall taste profile of the intense sweetener-containing beverage to be more like a sucrose-containing beverage. The results with respect to sweetness perception are shown in the bar chart of Figure 5. The majority of panellists perceived a more rapid onset of sweetness perception in the test sample 3 comprising 3.0 mg/l of additive A compared to the reference sample comprising only aspartame and no additive. The acronym "RTD" in Figure 5 stands for "ready to drink", which signifies that the test samples represent a beverage, rather than a concentrate or a syrup, for example.

Furthermore, a majority of the panellists reported a weaker "metallic" taste in the test samples 2 and 3 comprising 2.25 and 3.0 mg/l of additive A, respectively, compared to the reference sample comprising only aspartame and no additive. 25% of the panellists believed that sample 2 had a weaker metallic taste that reference sample 1 compared to 8% who believed reference sample 1 had the weaker metallic taste. 33% of the panellists believed that sample 3 had a weaker metallic taste that reference sample 1 compared to 17% who believed reference sample 1 had the weaker metallic taste.

These results, particularly when considered in combination with the data of Example Sets 1 and 2, demonstrates that the additives described herein may provide beneficial flavour improvements in beverages, for example in beverages comprising intense sweeteners such as stevia, aspartame acesulfame K and sucralose.

Although a few preferred embodiments have been shown and described, it will be appreciated by those skilled in the art that various changes and modifications might be made without departing from the scope of the invention, as defined in the appended claims.

Throughout this specification, the term "comprising" or "comprises" means including the component(s) specified but not to the exclusion of the presence of other components. The term "consisting essentially of" or "consists essentially of" means including the components specified but excluding other components except for materials present as impurities, unavoidable materials present as a result of processes used to provide the components, and components added for a purpose other than achieving the technical effect of the invention. Typically, when referring to compositions, a composition consisting essentially of a set of components will comprise less than 5% by weight, typically less than 3% by weight, more typically less than 1% by weight of non-specified components.

The term "consisting of" or "consists of" means including the components specified but excluding addition of other components.

Whenever appropriate, depending upon the context, the use of the term "comprises" or "comprising" may also be taken to encompass or include the meaning "consists essentially of" or "consisting essentially of", and may also be taken to include the meaning "consists of" or "consisting of".

For the avoidance of doubt, wherein amounts of components in a composition are described in wt%, this means the weight percentage of the specified component in relation to the whole composition referred to.

The optional features set out herein may be used either individually or in combination with each other where

appropriate and particularly in the combinations as set out in the accompanying claims. The optional features for each aspect or exemplary embodiment of the invention as set out herein are also to be read as applicable to any other aspect or exemplary embodiments of the invention, where appropriate. In other words, the skilled person reading this specification should consider the optional features for each exemplary embodiment of the invention as interchangeable and combinable between different exemplary embodiments.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, and drawings), and/or all of the steps of any method or process so disclosed, may be combined in any combination, except combinations where at least some of such features and/or steps are mutually exclusive.

Each feature disclosed in this specification (including any accompanying claims, and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, and drawings), or to any novel one, or any novel combination, of the steps of any method or process so disclosed.

## Claims

**1.** Use of an additive for improving the flavour of a beverage, wherein the additive is selected from:

a polyoxyethylene sorbitan fatty acid ester; or
a polyglycerol fatty acid ester;
wherein the beverage contains an intense sweetener selected from aspartame, acesulfame K, sucralose and stevia;
wherein the improvement of the flavour of the beverage is a reduction in the off-flavour and/or undesirable aftertaste of the intense sweetener, or
wherein the improvement of the flavour of the beverage quickens the onset of sweetness perception in a consumer of the beverage;
wherein the additive is present in the beverage in an amount of from 0.05 mg/l to 50 mg/l.

**2.** The use according to claim 1, wherein the beverage is a carbonated beverage.

**3.** The use according to claim 1 or claim 2, wherein the beverage contains a bulk sweetener, preferably selected from sucrose, glucose or fructose.

**4.** The use according to any one of claims 1 to 3, wherein the additive is a polyoxyethylene sorbitan fatty acid ester selected from one or more of polyoxyethylene-(20)-sorbitan tristearate, polyoxyethylene-(20)-sorbitan trioleate, polyoxyethylene-(4)-sorbitan monolaurate, polyoxyethylene-(20)-sorbitan monostearate, polyoxyethylene-(4)-sorbitan monostearate, polyoxyethylene-(20)-sorbitan monooleate and polyoxyethylene-(5)-sorbitan monooleate.

**5.** The use according to any one of claims 1 to 3, wherein the additive is a polyglycerol fatty acid ester which is the esterification reaction product of a) a triglyceride, or a fatty acid, or a methyl ester of a fatty acid, and b) a polyhydric alcohol which comprises b1) a polyglycerol having at least 3 glycerol units, and b2) glycerol and / or diglycerol.

**6.** The use according to any one of the preceding claims, wherein the additive has an HLB value in the range 7-16.

**7.** The use according to any one of the preceding claims, wherein the beverage is non-alcoholic.

**8.** The use according to any one of claims 1 to 6, wherein the beverage is alcoholic.

**9.** The use according to any one of the preceding claims, wherein the beverage comprises caffeine.

**10.** The use according to any one of the preceding claims, wherein the beverage comprises taurine.

**11.** The use according to any one of the preceding claims, wherein the beverage comprises a water insoluble component.

**12.** The use according to any one of the preceding claims, wherein the additive is added to a concentrate or precursor of the beverage.

## Patentansprüche

**1.** Verwendung eines Zusatzstoffs zur Verbesserung des Geschmacks eines Getränks, wobei der Zusatzstoff ausgewählt ist aus:

einem Polyoxyethylensorbitanfettsäureester; oder
einem Polyglycerinfettsäureester;
wobei das Getränk einen Intensivsüßstoff enthält, der aus Aspartam, Acesulfam K, Sucralose und Stevia ausgewählt ist;
wobei die Verbesserung des Geschmacks des Getränks in einer Verringerung des Fehlaromas und/oder unerwünschten Nachgeschmacks des Intensivsüßstoffs besteht oder
wobei die Verbesserung des Geschmacks des Getränks den Beginn der Süßheitswahrnehmung bei einem Konsumenten des Getränks beschleunigt;
wobei der Zusatzstoff in dem Getränk in einer Menge von 0,05 mg/l bis 50 mg/l vorliegt.

**2.** Verwendung nach Anspruch 1, wobei es sich bei dem Getränk um ein kohlensäurehaltiges Getränk handelt.

**3.** Verwendung nach Anspruch 1 oder Anspruch 2, wobei das Getränk einen Massensüßstoff enthält, der vorzugsweise aus Saccharose, Glucose oder Fructose ausgewählt ist.

**4.** Verwendung nach einem der Ansprüche 1 bis 3, wobei es sich bei dem Zusatzstoff um einen Polyoxyethylensorbitanfettsäureester handelt, der aus einem oder mehreren von Polyoxyethylen-(20)-sorbitantristearat, Polyoxyethylen-(20)-Sorbitantrioleat, Polyoxyethylen-(4)-sorbitanmonolaurat, Polyoxyethylen-(20)-sorbitanmonostearat, Polyoxyethylen-(4)-sorbitanmonostearat, Polyoxyethylen-(20)-sorbitanmonooleat und Polyoxyethylen-(5)-sorbitanmonooleat ausgewählt ist.

**5.** Verwendung nach einem der Ansprüche 1 bis 3, wobei es sich bei dem Zusatzstoff um einen Polyglycerinfettsäureester handelt, der das Veresterungsreaktionsprodukt von a) einem Triglycerid oder einer Fettsäure oder einem Methylester einer Fettsäure und b) einem mehrwertigen Alkohol ist, der b1) ein Polyglycerin mit mindestens 3 Glycerineinheiten und b2) Glycerin und/oder Diglycerin umfasst.

**6.** Verwendung nach einem der vorhergehenden Ansprüche, wobei der Zusatzstoff einen HLB-Wert im Bereich 7-16 aufweist.

**7.** Verwendung nach einem der vorhergehenden Ansprüche, wobei es sich bei dem Getränk um ein nichtalkoholisches Getränk handelt.

**8.** Verwendung nach einem der Ansprüche 1 bis 6, wobei es sich bei dem Getränk um ein alkoholisches Getränk handelt.

**9.** Verwendung nach einem der vorhergehenden Ansprüche, wobei das Getränk Coffein umfasst.

**10.** Verwendung nach einem der vorhergehenden Ansprüche, wobei das Getränk Taurin umfasst.

**11.** Verwendung nach einem der vorhergehenden Ansprüche, wobei das Getränk eine wasserunlösliche Komponente umfasst.

**12.** Verwendung nach einem der vorhergehenden Ansprüche, wobei der Zusatzstoff einem Konzentrat oder einer Vorstufe des Getränks zugesetzt wird.

## Revendications

**1.** Utilisation d’un additif afin d’améliorer l’arôme d’une boisson, l’additif étant choisi parmi :

un ester d'acide gras de polyoxyéthylène sorbitane ; ou
un ester d'acide gras de polyglycérol ;
dans laquelle la boisson contient un édulcorant intense choisi parmi l'aspartame, l'acésulfame K, le sucralose et la stévia ;
dans laquelle l'amélioration de l'arôme de la boisson est une réduction de l'arôme étranger et/ou de l'arrière-goût indésirable de l'édulcorant intense, ou
dans laquelle l'amélioration de l'arôme de la boisson accélère l'apparition de la perception de sucrosité chez un consommateur de la boisson ;
dans laquelle l'additif est présent dans la boisson en une quantité de 0,05 mg/l à 50 mg/l.

**2.** Utilisation selon la revendication 1, dans laquelle la boisson est une boisson gazeuse.

**3.** Utilisation selon la revendication 1 ou la revendication 2, dans laquelle la boisson contient un édulcorant de vrac, choisi de préférence parmi le saccharose, le glucose ou le fructose.

**4.** Utilisation selon l'une quelconque des revendications 1 à 3, l'additif étant un ester d'acide gras de polyoxyéthylène sorbitane choisi parmi l'un ou plusieurs parmi le tristéarate de polyoxyéthylène-(20)-sorbitane, le trioléate de polyoxyéthylène-(20)-sorbitane, le monolaurate de polyoxyéthylène-(4)-sorbitane, le monostéarate de polyoxyéthylène-(20)-sorbitane, le monostéarate de polyoxyéthylène-(4)-sorbitane, le monooléate de polyoxyéthylène-(20)-sorbitane et le monooléate de polyoxyéthylène-(5)-sorbitane.

**5.** Utilisation selon l'une quelconque des revendications 1 à 3, dans laquelle l'additif est un ester d'acide gras de polyglycérol qui est le produit de réaction d'estérification de a) un triglycéride, ou un acide gras, ou un ester méthylique d'un acide gras, et b) un alcool polyhydrique qui comprend b1) un polyglycérol ayant au moins 3 motifs glycérol, et b2) du glycérol et/ou diglycérol.

**6.** Utilisation selon l'une quelconque des revendications précédentes, dans laquelle l'additif a une valeur HLB dans la plage de 7 à 16.

**7.** Utilisation selon l'une quelconque des revendications précédentes, dans laquelle la boisson est non alcoolisée.

**8.** Utilisation selon l'une quelconque des revendications 1 à 6, dans laquelle la boisson est alcoolisée.

**9.** Utilisation selon l'une quelconque des revendications précédentes, dans laquelle la boisson comprend de la caféine.

**10.** Utilisation selon l'une quelconque des revendications précédentes, dans laquelle la boisson comprend de la taurine.

**11.** Utilisation selon l'une quelconque des revendications précédentes, dans laquelle la boisson comprend un composant insoluble dans l'eau.

**12.** Utilisation selon l'une quelconque des revendications précédentes, dans laquelle l'additif est ajouté à un concentré ou précurseur de la boisson.

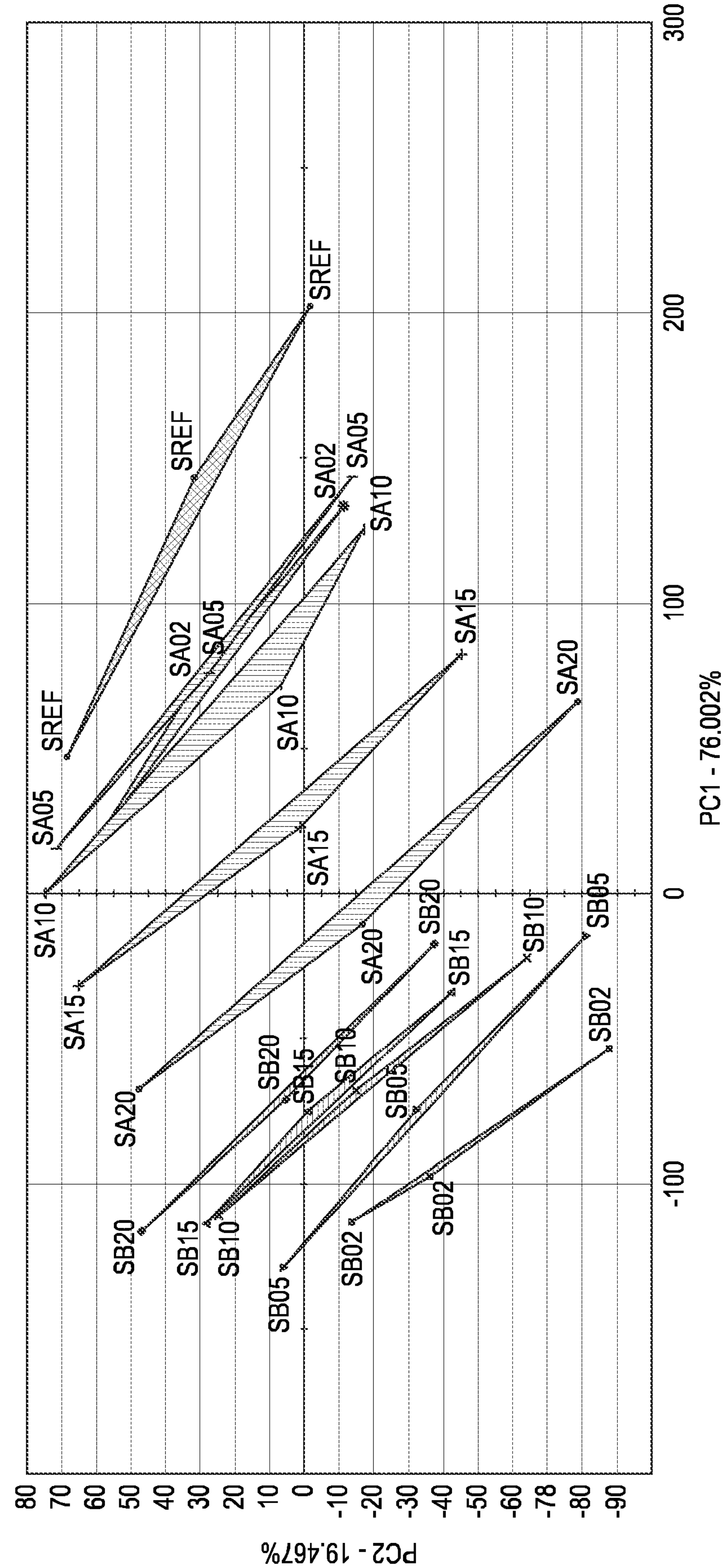
PC1 - 76.002%
PC2 - 19.467%
-100
0
100
200
300
80
70
60
50
40
30
20
10
0
-10
-20
-30
-40
-50
-60
-78
-80
-90
SREF
SA02
SA05
SA10
SA15
SA20
SB02
SB05
SB10
SB15
SB20

*FIG. 1*

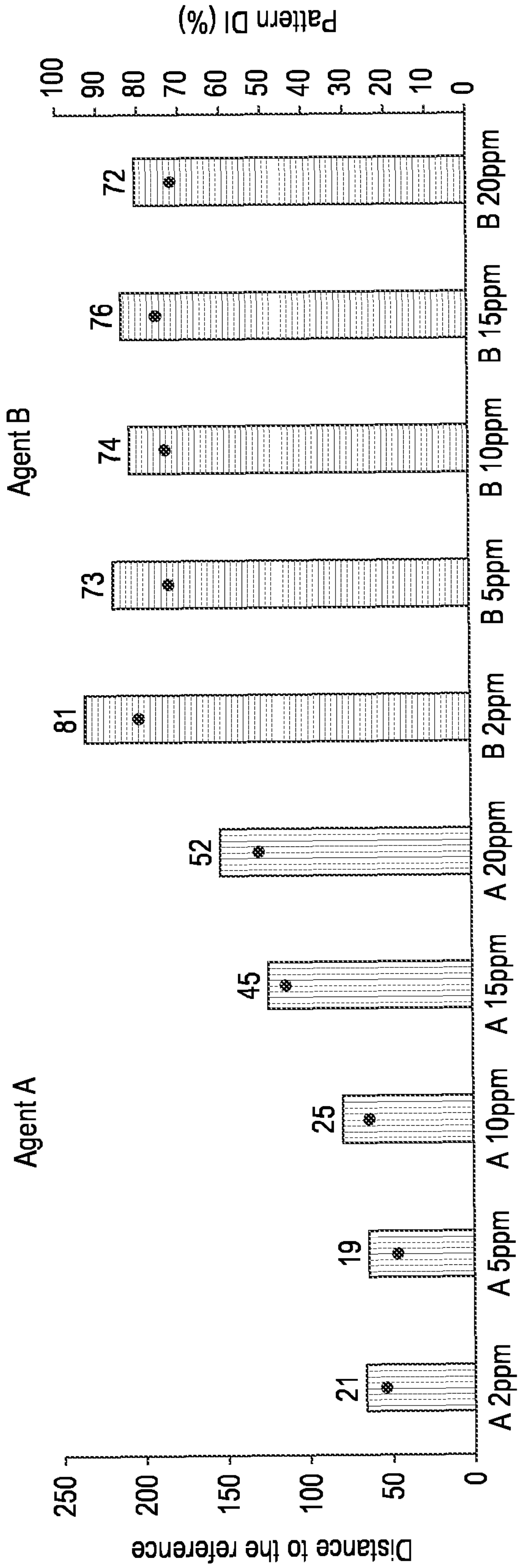
Agent A
Agent B
Distance to the reference
Pattern DI (%)
250
200
150
100
50
0
100
90
80
70
60
50
40
30
20
10
0
21
19
25
45
52
81
73
74
76
72
A 2ppm
A 5ppm
A 10ppm
A 15ppm
A 20ppm
B 2ppm
B 5ppm
B 10ppm
B 15ppm
B 20ppm

*FIG. 2*

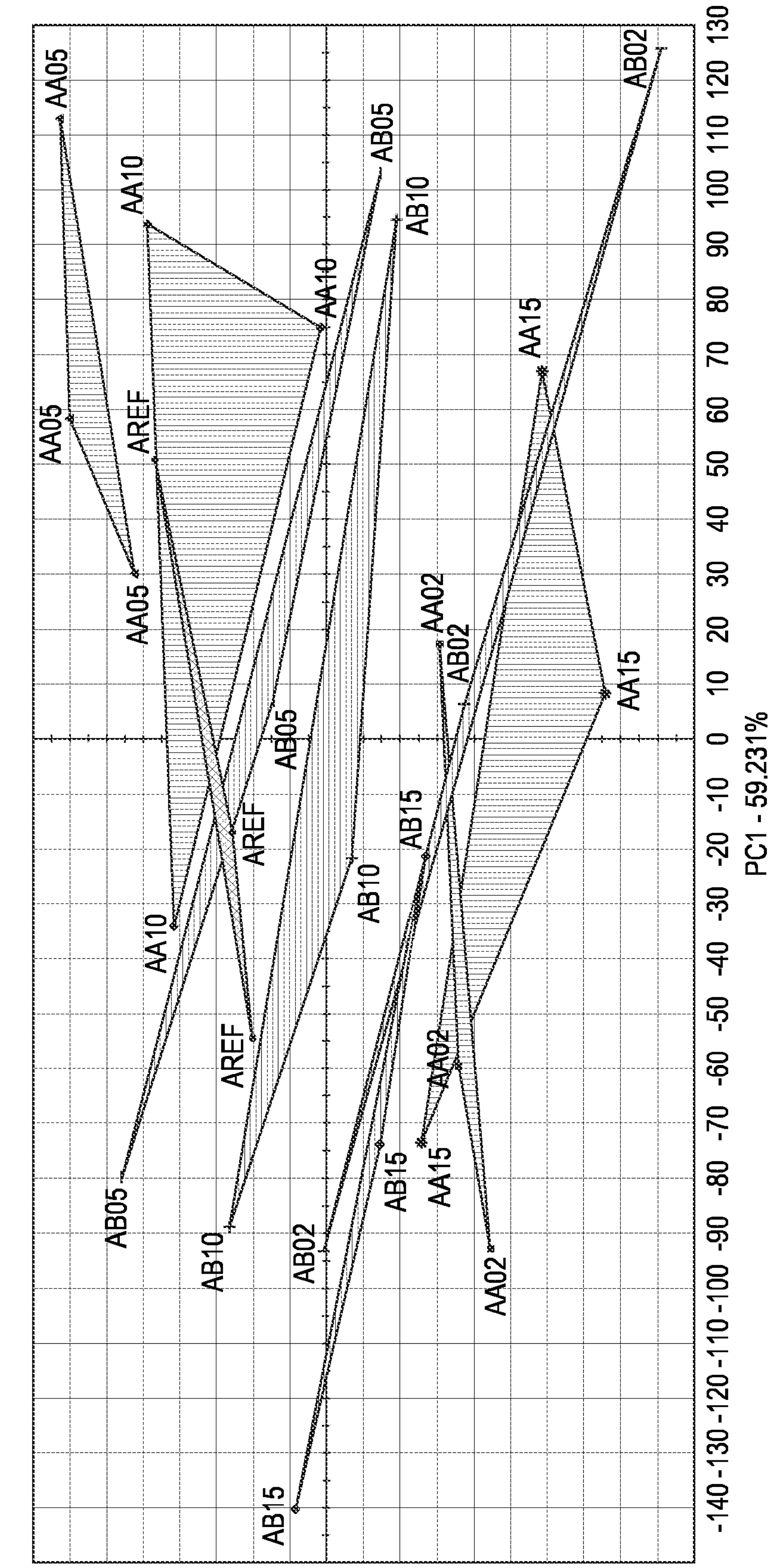


*FIG. 3*

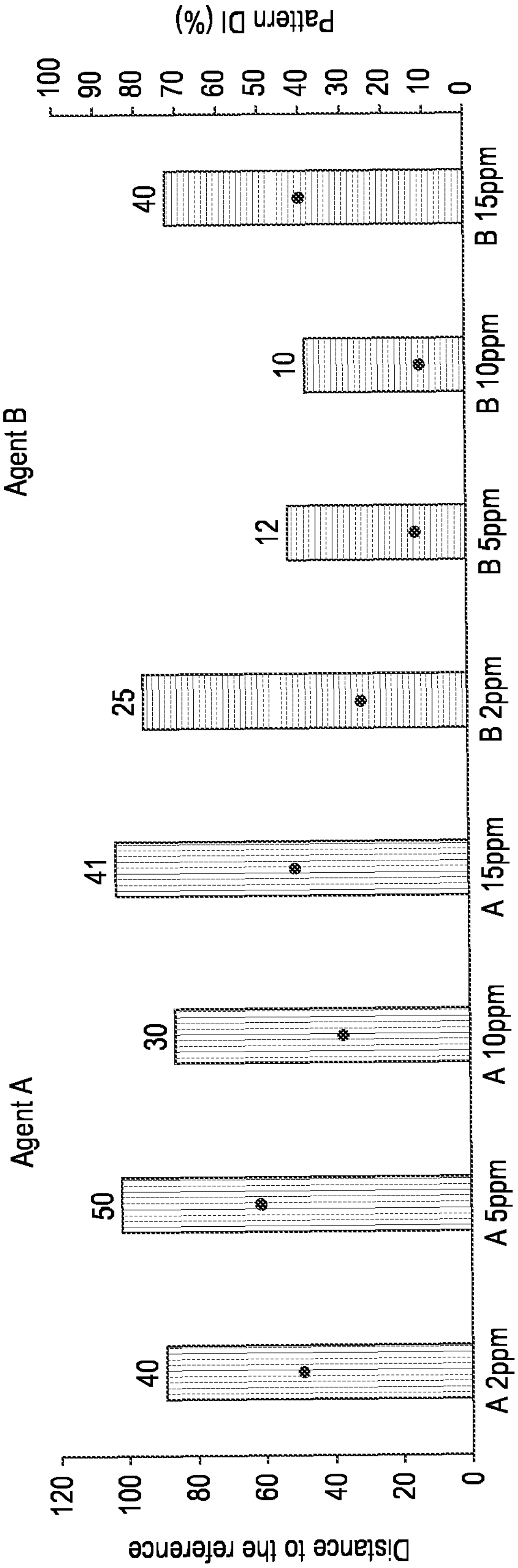
Agent A
Agent B
Distance to the reference
Pattern DI (%)
120
100
80
60
40
20
0
90
70
50
30
10
40
50
30
41
25
12
10
40
A 2ppm
A 5ppm
A 10ppm
A 15ppm
B 2ppm
B 5ppm
B 10ppm
B 15ppm

FIG. 4

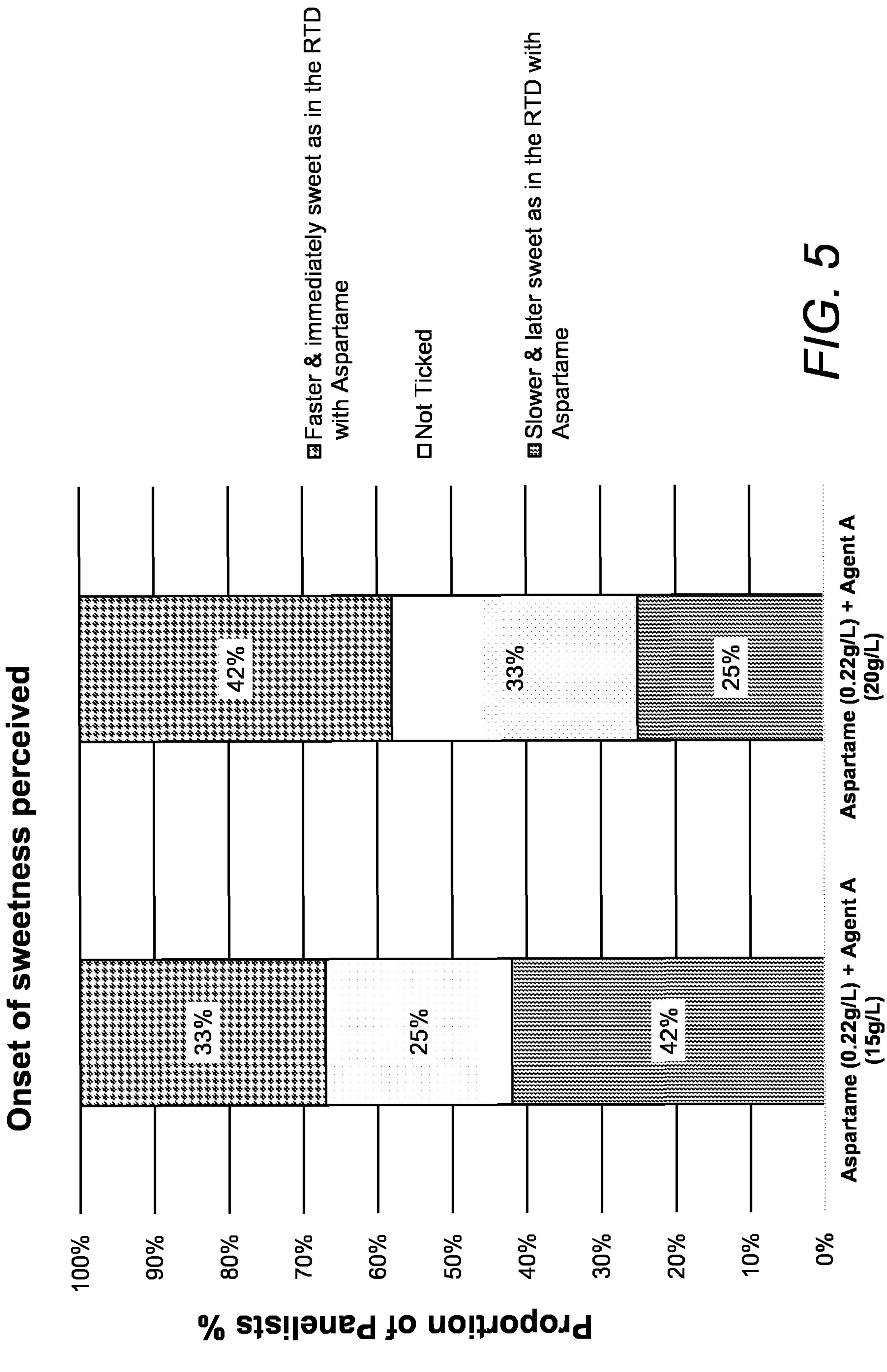
Onset of sweetness perceived
Proportion of Panelists %
100%
90%
80%
70%
60%
50%
40%
30%
20%
10%
0%
33%
25%
42%
42%
33%
25%
Aspartame (0.22g/L) + Agent A (15g/L)
Aspartame (0.22g/L) + Agent A (20g/L)
Faster & immediately sweet as in the RTD with Aspartame
Not Ticked
Slower & later sweet as in the RTD with Aspartame

*FIG. 5*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008065401 A1
- WO 2015033118 A1
- US 6368651 B1